# EUROPÄISCHE PATENTSCHRIFT

(11) **EP 4 095 298 B1**
(45) Veröffentlichungstag und Bekanntmachung des Hinweises auf die Patenterteilung: **14.02.2024**
(21) Anmeldenummer: 22171141.9
(22) Anmeldetag: 02.05.2022
(51) Int. Cl.: D04H 1/00, F16J 15/16, F16J 15/3284

(54) **ELEKTRISCH LEITFÄHIGER VLIESSTOFF, ERDUNGSRING, UMFASSEND EINEN SOLCHEN VLIESSTOFF UND ANORDNUNG DAMIT**
ELECTRICALLY CONDUCTIVE NONWOVEN FABRIC, GROUNDING RING COMPRISING SUCH A NONWOVEN FABRIC AND ASSEMBLY USING THE SAME
NON-TISSÉ ÉLECTRIQUEMENT CONDUCTEUR, RONDELLE DE MISE A LA TERRE COMPRENANT UN TEL NON-TISSÉ ET AGENCEMENT CORRESPONDANT

(30) Priorität: 28.05.2021 DE 102021113903
(43) Veröffentlichungstag der Anmeldung: 30.11.2022
(73) Patentinhaber: Carl Freudenberg KG, 69469 Weinheim (DE)
(72) Erfinder: Bantz, Marlene, 67483 Edesheim (DE); Hofmann, Jens, 68305 Mannheim (DE); Neuberger, Soeren, 68766 Hockenheim (DE); Morgenstern, Stefan, 69469 Weinheim (DE); Colineau, Francois, 79227 Schallstadt-Leutersberg (DE); Hintenlang, Günter, 69518 Abtsteinach (DE)

(56) Entgegenhaltungen:
- DE-A1-102013 000 982
- DE-A1-102014 010 269
- DE-A1-102018 104 753
- DE-A1-102018 124 256
- DE-A1-102019 113 039
- KR-A- 20210 024 798

## Beschreibung

### Technisches Gebiet

Die Erfindung betrifft einen elektrisch leitfähigen Vliesstoff, einen Erdungsring, umfassend einen solchen Vliesstoff und eine Anordnung damit.

Der elektrisch leitfähige Vliesstoff umfasst einen Roh-Vliesstoff mit einer ersten elektrischen Leitfähigkeit, wobei der Roh-Vliesstoff elektrisch leitfähige Partikel umfasst, mit einer zweiten elektrischen Leitfähigkeit und wobei die zweite elektrische Leitfähigkeit größer als die erste elektrische Leitfähigkeit ist.

### Stand der Technik

Elektrisch leitfähige Vliesstoffe sind allgemein bekannt und gelangen beispielsweise in Erdungsringen im Bereich "E-Mobilität" zur Anwendung. Insbesondere für einen solchen Anwendungsfall ist von Vorteil, wenn der elektrisch leitfähige Vliesstoff einen besonders niedrigen elektrischen Widerstand und damit eine besonders hohe elektrische Leitfähigkeit aufweist. Vliesstoffe, auch für die zuvor beschriebene Anwendung, hatten bisher einen elektrischen Widerstand von 50 Ω bis 500 Ω, was für eine elektromagnetische Verträglichkeit zum Beispiel in Verbindung mit einem Elektromotor eines Kraftfahrzeugs zu hoch ist.

Ein elektrisch leitfähiger Vliesstoff, wie eingangs beschrieben, ist aus der DE 10 2019 113 039 A1 bekannt. Der elektrisch leitfähige Vliesstoff gelangt in einer Anordnung zur Anwendung, umfassend eine Welle, ein Gehäuse sowie den elektrisch leitfähigen Vliesstoff zur Herstellung einer elektrisch leitfähigen Verbindung zwischen der Welle und dem Gehäuse. Der elektrisch leitfähige Vliesstoff ist an einem Haltekörper festgelegt und kontaktiert die Welle und das Gehäuse.

Der elektrisch leitfähige Vliesstoff ist in einer PTFE-Dispersion getränkt, wodurch der Vliesstoff stabilisiert und der Reibwert gegenüber der Welle reduziert ist.

Außerdem umfasst der elektrisch leitfähige Vliesstoff elektrisch leitfähige Partikel in Form von Kohlenstoff-Fasern. Alternativ können metallische Fasern zur Anwendung gelangen.

Aus der DE 10 2018 104 753 A1 ist eine Dichtungsanordnung bekannt, insbesondere für Wälzlager.

Die Dichtungsanordnung umfasst einen Radialwellendichtring und einen Erdungsring für einen Stromübergang zwischen zwei Bauteilen, die durch den Radialwellendichtring gegeneinander abgedichtet sind. Die Dichtungsanordnung kann in elektrisch betriebenen Kraftfahrzeugen zur Anwendung gelangen.

Der Erdungsring besteht aus einem elektrisch leitfähigen PTFE-Werkstoff, wobei der PTFE-Werkstoff durch elektrisch leitfähige Partikel elektrisch leitfähig gemacht wird. Die Partikel können aus Graphit bestehen.

Alternativ kann eine Schicht aus einem metallischen Werkstoff, insbesondere aus Silber, vorgesehen sein.

Elektrisch leitfähige Vliesstoffe werden ausdrücklich als nachteilig erachtet.

Aus der DE 2018 124 256 A1 ist ein Dichtelement bekannt, zur Herstellung einer elektrisch leitfähigen Verbindung zwischen zwei Maschinenelementen, umfassend eine Dichtscheibe und einen Tragring, die miteinander verklemmt sind. Die Dichtscheibe besteht aus einem elektrisch leitfähigen Vliesstoff. Der elektrisch leitfähige Vliesstoff umfasst dabei elektrisch leitfähige Partikel, beispielsweise in Form metallischer Fasern. Die zur Anwendung gelangenden elektrisch leitfähigen Fasern haben bevorzugt eine Länge von mindestens 10 mm. Durch diese verhältnismäßig große Länge der Fasern kann elektrischer Strom besonders gut direkt übertragen werden, so dass die vorbekannte Dichtscheibe einen verhältnismäßig geringen elektrischen Widerstand aufweist. Die Fasern sind in direktem Kontakt mit den beiden Maschinenelementen.

Ein Erdungsring und eine Anordnung, die einen solchen Erdungsring umfasst, sind aus der DE 10 2018 105 376 A1 bekannt.

Der Erdungsring ist als Vorschaltdichtung für einen Dichtring ausgebildet und besteht aus einem elektrisch leitfähigen Werkstoff, der während seiner bestimmungsgemäßen Verwendung die Oberfläche eines zu erdenden ersten Maschinenelements anliegend berührt. Ein zweites Maschinenelement, das ebenso wie das erste Maschinenelementen aus einem elektrisch leitfähigen Werkstoff besteht und das konzentrisch zu dem ersten Maschinenelement angeordnet ist, ist auf ein definiertes Massepotential geerdet, wobei das erste und das zweite Maschinenelement durch den Erdungsring elektrisch leitend verbunden sind.

Aus der DE 10 2013 000 982 A1 ist eine Dichtung bekannt, die einen Dichtring mit zumindest einer dynamisch beanspruchten Dichtlippe und eine als Erdungsring ausgebildete Vorschaltdichtung umfasst. Die Vorschaltdichtung ist mit axialem Abstand benachbart zur Dichtlippe angeordnet und besteht aus einem elektrisch leitfähigen Werkstoff. Die Dichtlippe und die Vorschaltdichtung umschließen eine abzudichtende Oberfläche eines abzudichtenden ersten Maschinenelements anliegend, wobei das erste Maschinenelement mit radialem Abstand benachbart zu einem zweiten Maschinenelement angeordnet ist. In dem durch den radialen Abstand gebildeten Spalt sind der Dichtring und die Vorschaltdichtung angeordnet. Das zweite Maschinenelement ist auf ein definiertes Massepotential geerdet, wobei das erste und das zweite Maschinenelement von der Vorschaltdichtung jeweils anliegend berührt und dadurch elektrisch leitend miteinander verbunden sind.

Die Vorschaltdichtung ist als Potentialausgleichsring ausgebildet und besteht zum Beispiel aus einem elektrisch leitfähigen, mit PTFE imprägnierten Vliesstoff. Eine mechanische Beschädigung der Maschinenelemente durch einen elektrischen Spannungsdurchschlag ist folglich ausgeschlossen.

Ohne den elektrischen Potentialausgleich könnten mechanische Beschädigungen der gegeneinander abzudichtenden Maschinenelemente dadurch entstehen, dass unterschiedlich große elektrische Potentiale der Maschinenelemente durch einen elektrischen Spannungsdurchschlag ausgeglichen werden. Ein solcher Spannungsdurchschlag ist umso wahrscheinlicher, je enger die Maschinenelemente mit unterschiedlichen elektrischen Potentialen einander benachbart zugeordnet sind. Ein Spannungsdurchschlag kann einen Materialabtrag an dem Maschinenelement mit relativ geringerer Ladung bewirken und eine Veränderung des Materialgefüges in dem Bereich, in dem der Spannungsdurchschlag erfolgt.

Aus der DE 10 2014 010 269 A1 ist eine weitere Vorschaltdichtung bekannt. Die Vorschaltdichtung umfasst eine im Wesentlichen kreisringförmig ausgebildete Scheibe aus einem elektrisch leitfähigen und luftdurchlässigen Werkstoff und einen Tragkörper, wobei die Scheibe - bezogen auf den Tragkörper - als separat erzeugtes Einzelteil ausgebildet und mit dem Tragkörper verbunden ist.

Der Tragkörper kann durch einen Dichtring gebildet sein.

Die Vorschaltdichtung hat nicht nur die Aufgabe eines elektrischen Potentialausgleichs, sondern außerdem die Aufgabe, Verunreinigungen aus der Umgebung an einem Vordringen zur Dichtlippe des Dichtrings zu hindern.

Die Vorschaltdichtung ist eine entkoppelte elektrische Brücke. Unter "entkoppelt" wird in diesem Zusammenhang verstanden, dass die Dichtfunktion eines zum Beispiel mit der Vorschaltdichtung kombinierten Dichtrings von der Funktion der elektrischen Brücke, nämlich einen Spannungsdurchschlag zu vermeiden und einen elektrischen Potentialausgleich zwischen den Maschinenelementen zu bewirken, entkoppelt ist.

Aus der WO 2017/148586 A1 ist ein Wellen-Erdungsring bekannt, der zur Ableitung induzierter Spannungen beziehungsweise elektrischer Ladungen von einem ersten Maschinenelement, vorzugsweise einer Welle, in ein zweites Maschinenelement dient. Der Wellen-Erdungsring hat ein ringförmiges, aus elektrisch leitendem Material bestehendes Gehäuse, das mit dem einen Maschinenelement elektrisch leitend verbunden ist und mit wenigstens einem Ableitelement in elektrisch leitender Verbindung steht. Das Ableitelement ist herstellungsbedingt scheibenförmig ausgebildet, besteht ebenfalls aus einem elektrisch leitenden Material und steht mit dem anderen Maschinenelement in elektrisch leitender Verbindung. Das Ableitelement kann aus einem PTFE-Werkstoff mit elektrisch leitfähigen Füllstoffen bestehen. Als elektrisch leitfähiges Material ist Silberlack offenbart, der das Ableitelement, insbesondere dann, wenn es aus einem elektrisch nicht-leitenden Material besteht, bevorzugt vollständig umschließt. Silberlack sich demnach einfach auf den Grundkörper des Ableitelements aufzubringen und weist einen sehr niedrigen spezifischen Widerstand auf. Das Ableitelement ist ein zumindest über einen Teil seines Umfangs sich erstreckender, scheibenförmiger Ableitkörper.

Der elastisch gebogene Randbereich des Ableitkörpers kann, in Umfangsrichtung betrachtet, mit randoffenen Schlitzen versehen sein. Diese Schlitze werden in einer solchen Zahl und/oder Länge angebracht, dass einerseits die Rückstellkraft, mit der der Randbereich am ersten oder zweiten Maschinenelementen anliegt, ausreichend hoch ist, damit genügend leitfähige Fläche des elektrisch leitfähigen Materials an dem entsprechenden Maschinenelement anliegt, andererseits jedoch so gering ist, dass die Reibung minimiert ist.

### Darstellung der Erfindung

Der Erfindung liegt die Aufgabe zu Grunde, einen elektrisch leitfähigen Vliesstoff und einen damit versehenen Erdungsring derart weiterzuentwickeln, dass dieser einen besonders niedrigen elektrischen Widerstand und damit eine besonders hohe elektrische Leitfähigkeit aufweist, so dass ein solcher Erdungsring auch gut im Zusammenhang mit E-Mobilität zur Anwendung gelangen kann.

Außerdem soll der Vliesstoff prozesssicher herstellbar sein und gute Gebrauchseigenschaften aufweisen. Insbesondere soll die Luftdurchlässigkeit des Vliesstoffs für den jeweiligen Anwendungsfall ausreichend hoch bleiben.

Zur Lösung dieser Aufgabe ist es vorgesehen, dass die Partikel eine Größe von 3 µm bis 8 µm aufweisen, dass der Roh-Vliesstoff Fasern umfasst, mit einer Faserdicke von 4 µm bis 10 µm und dass der Vliesstoff während seiner bestimmungsgemäßen Verwendung einen elektrischen Widerstand ≤ 10 Ω aufweist.

Dadurch, dass die elektrisch leitfähigen Partikel eine im Vergleich um Roh-Vliesstoff verbesserte elektrische Leitfähigkeit aufweisen, wird die elektrische Leitfähigkeit des Vliesstoffs insgesamt verbessert.

Der elektrische Widerstand ist durch die elektrisch leitfähigen Partikel während des Betriebs ≤ 10 Ω, im Neuzustand sogar ≤ 1 Ω und dadurch wesentlich geringer als bei herkömmlichen Vliesstoffen ohne elektrisch leitfähige Partikel.

Die Partikel weisen eine Größe von 3 µm bis 8 µm auf. Eine derartige Partikelgröße kann besonders prozesssicher in den Roh-Vliesstoff eingebracht werden. Werden die elektrisch leitfähigen Partikel beispielsweise durch eine Imprägnierung auf den Roh-Vliesstoff aufgebracht, setzen sich Partikel dieser Größe in einem Imprägnierbad nicht unerwünscht ab.

Diese Vorteile lassen sich durch Partikel außerhalb des genannten Bereichs nicht mehr oder nur eingeschränkt erreichen.

Partikel mit einer Größe von deutlich mehr als 8 µm würden bei einer Verwendung des elektrisch leitfähigen Vliesstoffs als Erdungsring und Vorschaltdichtung in Verbindung mit einem Radialwellendichtring zu einem Ausfall des Radialwellendichtrings führen, weil die Partikel aus dem Vliesstoff unter die Dichtkante des Dichtrings kommen könnten. Auch könnte die Luftdurchlässigkeit des Vliesstoffs dadurch so gering werden, dass der damit funktionstechnisch im Zusammenhang stehende Dichtring, zum Beispiel dessen Pumpwirkung, nicht mehr zuverlässig funktioniert.

Der Roh-Vliesstoff umfasst Fasern mit einer Faserdicke von 4 µm bis 10 µm. Eine solche Faserdicke ist von Vorteil, weil dadurch eine anisotrope Struktur entsteht und immer Faserenden des Vliesstoffs die beiden elektrisch leitend miteinander zu verbindenden Maschinenelemente, also zum Beispiel die Welle und das die Welle umschließende Gehäuse, berühren.

Die Größe der Partikel entspricht vorteilhafterweise im Wesentlichen der Faserdicke der Fasern des Vliesstoffs.

Durch eine solche Auslegung der Faserdicke wird erreicht, dass der Vliesstoff nicht unerwünscht steif wird, dass die Fasern während der bestimmungsgemäßen Verwendung des Vliesstoffs während einer langen Gebrauchsdauer nicht brechen und dass die erforderliche Luftdurchlässigkeit gegeben ist.

Die Partikel haben bevorzugt einen Gewichtsanteil von 30 % bis 60 %. Hierbei ist von Vorteil, dass sich für eine gute elektrische Leitfähigkeit ausreichend viele Partikel im Vliesstoff befinden und dass die Partikel gleichmäßig im Vliesstoff verteilt sind. Außerdem ist von Vorteil, dass ein derartiger Gewichtsanteil wirtschaftlich kostengünstiger zu realisieren ist als ein höherer Gewichtsanteil. Gewichtsanteile von weniger als 30 % bewirken eine zu geringe Erhöhung der elektrischen Leitfähigkeit des Vliesstoffs.

Bei einem Gewichtsanteil von mehr als 60 % nimmt die Steifigkeit des mit elektrisch leitfähigen Partikeln veredelten Vliesstoffs zu und die Flexibilität nimmt ab. Dadurch erhöhen sich die Radialkraft und die Anpressung, was zu einem erhöhten Abrieb führen kann. Weiterhin verschlechtert sich bei einem höheren Anteil an elektrisch leitfähigen Partikeln die Vernetzung und damit die chemische Beständigkeit des Elastomers im Vliesstoff

Gemäß einer vorteilhaften Ausgestaltung kann es vorgesehen sein, dass die Partikel durch Silberpartikel gebildet sind. Silberpartikel weisen eine besonders hohe elektrische Leitfähigkeit auf und sind deshalb besonders gut geeignet, die elektrische Leitfähigkeit des Roh-Vliesstoffs signifikant zu erhöhen. Diese signifikante Erhöhung der elektrischen Leitfähigkeit kann durch die besonders hohe Leitfähigkeit der Silberpartikel auch dann erreicht werden, wenn der Gewichtsanteil der Partikel nur vergleichsweise gering, zum Beispiel im zuvor genannten Bereich zwischen 30 % und 60 % liegt.

Nach einer vorteilhaften Ausgestaltung kann es vorgesehen sein, dass der Roh-Vliesstoff Fasern umfasst, mit einer Faserlänge von 10 mm bis 14 mm. Hierbei ist von Vorteil, dass durch Fasern einer solchen Faserlänge für die meisten Anwendungsfälle die gewünschte Steifigkeit/Flexibilität des Vliesstoffs erzielt wird.

Der Roh-Vliesstoff kann zusätzlich PTFE-Partikel umfassen. Insbesondere dann, wenn der elektrisch leitfähige Vliesstoff dynamisch beansprucht ist, beispielsweise auch dann, wenn er als Erdungsring in Verbindung mit einer Abdichtung, zum Beispiel einem Dichtring, zur Anwendung gelangt, wird durch eine solche Maßnahme die Reibung verringert und dadurch der Verschleiß reduziert.

Die PTFE-Partikel können einen Gewichtsanteil von 5 % bis 15 % haben. Für die meisten Anwendungsfälle ist ein solcher Gewichtsanteil ausreichend, um Reibung während der bestimmungsgemäßen Verwendung auf ein Minimum zu reduzieren. Außerdem ist von Vorteil, dass ein solcher Vliesstoff durch den geringen Gewichtsanteil an PTFE-Partikeln in wirtschaftlicher Hinsicht relativ kostengünstig herstellbar ist.

Das Flächengewicht des Vliesstoffs kann 500 g/m² bis 1.000 g/m² betragen.

Hierbei ist von Vorteil, dass das aus dem Vliesstoff hergestellte Maschinenelement, beispielsweise eine Erdungsring, nur ein sehr geringes Gesamtgewicht hat. Kombiniert mit einem Dichtring zu einer funktionstechnischen Einheit, ist das Gewicht des Erdungsrings praktisch vernachlässigbar gering. Außerdem ist bei einem solchen Flächengewicht von Vorteil, dass der Vliesstoff im Anschluss an eine Imprägnierung ausreichend mit Imprägnierung getränkt ist und die elastischen Eigenschaften des Vliesstoffs in Kombination mit seiner elektrischen Leitfähigkeit gewährleistet sind.

Bei kleineren oder größeren Flächengewichten ist von Nachteil, dass insbesondere die elektrische Leitfähigkeit nicht ausreichend ist und/oder die mechanischen Eigenschaften des Vliesstoffs für viele Anwendungen ungeeignet sind.

Die Linienpressung in Radialkraftmessung nach DIN 3761, Messung auf der Welle, kann im herstellungsbedingten Zustand des Vliesstoffs 0,1 N/mm bis 0,8 N/mm betragen.

Der genannte Bereich ist besonders vorteilhaft, weil eine höhere Linienpressung die Reibung und damit einhergehend die Wärmeentwicklung erhöht und dadurch die Lebensdauer durch unerwünscht frühzeitige Alterung des Vliesstoffs reduzieren würde.

Eine niedrigere Linienpressung würde dazu führen, dass der Vliesstoff als elektrisch leitfähiges Maschinenelementen nicht mehr funktioniert; als Erdungsring würde der Vliesstoff bei dynamischer Beanspruchung die radial angrenzenden Maschinenelemente nicht mehr zuverlässig berühren.

Die Herstellung eines elektrisch leitfähigen Vliesstoffs, wie zuvor beschrieben, kann derart erfolgen, dass ein Roh-Vliesstoff mit einer Imprägnierung imprägniert wird, die die elektrisch leitfähigen Partikel umfasst.

Die Imprägnierung kann beidseitig oder nur einseitig auf den Roh-Vliesstoff aufgebracht werden.

Die nur einseitig auf den Roh-Vliesstoff aufgebrachte Imprägnierung hat den Vorteil, dass dabei weniger Imprägnierung verbraucht wird und dadurch der Vliesstoff kostengünstiger herstellbar ist.

Ein weiterer Vorteil ist, dass die nur einseitig imprägnierte Vliesstoffscheibe eine Orientierung erhält. Wird die Vliesstoffscheibe zum Beispiel in Kombination mit einem Radialwellendichtring verwendet und mit diesem verklebt wird, muss je nach Montagerichtung die imprägnierte Seite der Vliesstoffscheibe beim Verkleben vom Radialwellendichtring ab- oder diesem zugewandt sein. Beim Einfädeln der Welle bzw. Aufschieben auf die Welle biegt sich der äußere Randbereich der Vliesstoffscheibe je nach Montagerichtung auf die eine oder andere Seite um, wobei gewährleistet sein muss, dass die imprägnierte Seite im montierten Zustand sowohl die Welle als auch das Gehäuse kontaktiert, um die elektrisch leitfähige Verbindung herzustellen. Eine solche gerichtete Verklebung ist auch bei der Prozesskontrolle von Vorteil.

Weiterhin betrifft die Erfindung einen Erdungsring, umfassend einen Vliesstoffring aus einem elektrisch leitfähigen Vliesstoff, wie zuvor beschrieben. Ein solcher Erdungsring kann im Bereich E-Mobilität zur Anwendung gelangen.

Der Vliesstoffring kann an einem elektrisch leitfähigen Tragring festgelegt sein. Die Festlegung kann adhäsiv oder mechanisch, zum Beispiel durch eine Klemmung, erfolgen.

Außerdem ist eine Anordnung beansprucht, umfassend einen solchen Erdungsring sowie ein erstes und ein zweites Maschinenelement, wobei der Erdungsring eine abzudichtende Oberfläche des ersten Maschinenelements anliegend berührt, wobei das erste Maschinenelement konzentrisch zu dem zweiten Maschinenelement angeordnet ist, wobei das erste Maschinenelement mit radialem Abstand benachbart zum zweiten Maschinenelement angeordnet ist, wobei in dem durch den radialen Abstand gebildeten Spalt der Erdungsring angeordnet ist, wobei das zweite Maschinenelement auf ein definiertes Massepotential geerdet ist und wobei das erste und das zweite Maschinenelement von dem Erdungsring jeweils anliegend berührt und dadurch elektrisch leitend miteinander verbunden sind. Das erste Maschinenelement kann durch eine Welle oder durch ein die Welle umschließendes Gehäuse und das zweite Maschinenelement durch ein eine Welle umschließendes Gehäuse oder durch eine Welle gebildet sein.

## Patentansprüche

1. Elektrisch leitfähiger Vliesstoff, umfassend einen Roh-Vliesstoff mit einer ersten elektrischen Leitfähigkeit, wobei der Roh-Vliesstoff elektrisch leitfähige Partikel umfasst, mit einer zweiten elektrischen Leitfähigkeit und wobei die zweite elektrische Leitfähigkeit größer als die erste elektrische Leitfähigkeit ist, **dadurch gekennzeichnet, dass** die Partikel eine Größe von 3 µm bis 8 µm aufweisen, dass der Roh-Vliesstoff Fasern umfasst, mit einer Faserdicke von 4 µm bis 10 µm und dass der Vliesstoff während seiner bestimmungsgemäßen Verwendung einen elektrischen Widerstand ≤ 10 Ω aufweist.

2. Vliesstoff nach Anspruch 1, **dadurch gekennzeichnet, dass** die Partikel einen Gewichtsanteil von 30 % bis 60 % haben.

3. Vliesstoff nach einem der Ansprüche 1 oder 2, **dadurch gekennzeichnet, dass** die Partikel durch Silberpartikel gebildet sind.

4. Vliesstoff nach einem der Ansprüche 1 bis 3, **dadurch gekennzeichnet, dass** der Roh-Vliesstoff Fasern umfasst, mit einer Faserlänge von 10 mm bis 14 mm.

5. Vliesstoff nach einem der Ansprüche 1 bis 4, **dadurch gekennzeichnet, dass** der Roh-Vliesstoff PTFE-Partikel (3) umfasst.

6. Vliesstoff nach Anspruch 5, **dadurch gekennzeichnet, dass** die PTFE-Partikel einen Gewichtsanteil von 5 bis 15 % haben.

7. Vliesstoff nach einem der Ansprüche 1 bis 6, **dadurch gekennzeichnet, dass** dessen Flächengewicht 500 g/m² bis 1000 g/m² beträgt.

8. Vliesstoff nach einem der Ansprüche 1 bis 7, **dadurch gekennzeichnet, dass** dessen Linienpressung in Radialkraftmessung nach DIN 3761, Messung auf der Welle, im herstellungsbedingten Zustand des Vliesstoffs 0,1 N/mm bis 0,8 N/mm beträgt.

9. Erdungsring, umfassend einen Vliesstoffring (4) aus einem elektrisch leitfähigen Vliesstoff nach einem der Ansprüche 1 bis 8.

10. Erdungsring nach Anspruch 9, **dadurch gekennzeichnet, dass** der Vliesstoffring an einem elektrisch leitfähigen Tragring festgelegt ist.

11. Anordnung, umfassend einen Erdungsring nach einem der Ansprüche 9 oder 10 und ein erstes Maschinenelement und ein zweites Maschinenelement, wobei der Erdungsring eine Oberfläche des ersten Maschinenelements anliegend berührt, wobei das erste Maschinenelement konzentrisch zu dem zweiten Maschinenelement angeordnet ist, wobei das erste Maschinenelement mit radialem Abstand benachbart zum zweiten Maschinenelement angeordnet ist, wobei in dem durch den radialen Abstand gebildeten Spalt der Erdungsring angeordnet ist, wobei das zweite Maschinenelement auf ein definiertes Massepotential geerdet ist und wobei das erste und das zweite Maschinenelement von dem Erdungsring jeweils anliegend berührt und dadurch elektrisch leitend miteinander verbunden sind.

12. Erdungsring nach Anspruch 11, **dadurch gekennzeichnet, dass** das erste Maschinenelement durch eine Welle oder durch ein die Welle umschließendes Gehäuse und das zweite Maschinenelement durch ein die Welle umschließendes Gehäuse oder durch eine Welle gebildet ist.

## Claims

1. Electrically conductive nonwoven comprising a raw nonwoven having a first electrical conductivity, wherein the raw nonwoven comprises electrically conductive particles having a second electrical conductivity, and wherein the second electrical conductivity is higher than the first electrical conductivity, **characterized in that** the particles have a size of from 3 µm to 8 µm, **in that** the raw nonwoven comprises fibres having a fibre thickness of from 4 µm to 10 µm, and **in that** the nonwoven has an electrical resistance ≤ 10 Ω during its intended use.

2. Nonwoven according to Claim 1, **characterized in that** the particles have a proportion by weight of from 30% to 60%.

3. Nonwoven according to one of Claims 1 or 2, **characterized in that** the particles are formed by silver particles.

4. Nonwoven according to one of Claims 1 to 3, **characterized in that** the raw nonwoven comprises fibres having a fibre length of from 10 mm to 14 mm.

5. Nonwoven according to one of Claims 1 to 4, **characterized in that** the raw nonwoven comprises PTFE particles (3).

6. Nonwoven according to Claim 5, **characterized in that** the PTFE particles have a proportion by weight of from 5% to 15%.

7. Nonwoven according to one of Claims 1 to 6, **characterized in that** its surface weight is from 500 g/m² to 1000 g/m².

8. Nonwoven according to one of Claims 1 to 7, **characterized in that** its linear pressure in a radial force measurement according to DIN 3761, measurement on the shaft, in the production-related state of the nonwoven is from 0.1 N/mm to 0.8 N/mm.

9. Grounding ring comprising a nonwoven ring (4) consisting of an electrically conductive nonwoven according to one of Claims 1 to 8.

10. Grounding ring according to Claim 9, **characterized in that** the nonwoven ring is fastened on an electrically conductive support ring.

11. Arrangement comprising a grounding ring according to one of Claims 9 or 10 and a first machine element and a second machine element, wherein the grounding ring tightly touches a surface of the first machine element, wherein the first machine element is arranged concentrically with the second machine element, wherein the first machine element is arranged at a radial distance next to the second machine element, wherein the grounding ring is arranged in the gap formed by the radial distance, wherein the second machine element is grounded to a defined ground potential and wherein the first and the second machine elements are each touched tightly by the grounding ring and are thereby electrically conductively connected to one another.

12. Grounding ring according to Claim 11, **characterized in that** the first machine element is formed by a shaft or by a housing enclosing the shaft, and the second machine element is formed by a housing enclosing the shaft or by a shaft.

## Revendications

1. Non-tissé électriquement conducteur, comprenant un non-tissé brut présentant une première conductivité électrique, le non-tissé brut comprenant des particules électriquement conductrices présentant une deuxième conductivité électrique et la deuxième conductivité électrique étant supérieure à la première conductivité électrique, **caractérisé en ce que** les particules ont une taille de 3 µm à 8 µm, **en ce que** le non-tissé brut comprend des fibres ayant une épaisseur de fibres de 4 µm à 10 µm et **en ce que** le non-tissé présente une résistance électrique ≤ 10 Ω lorsqu'il est utilisé comme prévu.

2. Non-tissé selon la revendication 1, **caractérisé en ce que** les particules sont dans un pourcentage en poids de 30 % à 60 %.

3. Non-tissé selon l'une des revendications 1 ou 2, **caractérisé en ce que** les particules sont formées par des particules d'argent.

4. Non-tissé selon l'une des revendications 1 à 3, **caractérisé en ce que** le non-tissé brut comprend des fibres d'une longueur de fibres de 10 mm à 14 mm.

5. Non-tissé selon l'une des revendications 1 à 4, **caractérisé en ce que** le non-tissé brut comprend des particules de PTFE (3).

6. Non-tissé selon la revendication 5, **caractérisé en ce que** les particules de PTFE sont dans un pourcentage en poids de 5 à 15 %.

7. Non-tissé selon l'une des revendications 1 à 6, **caractérisé en ce que** le grammage du non-tissé est de 500 g/m² à 1000 g/m².

8. Non-tissé selon l'une des revendications 1 à 7, **caractérisé en ce que** la pression linéaire du non-tissé en mesure de force radiale selon DIN 3761, mesure sur l'arbre, à l'état de fabrication du non-tissé est de 0,1 N/mm à 0,8 N/mm.

9. Bague de mise à la terre, comprenant une bague de non-tissé (4) en un non-tissé électriquement conducteur selon l'une des revendications 1 à 8.

10. Bague de mise à la terre selon la revendication 9, **caractérisé en ce que** la bague de non tissé est fixée sur une bague de support électriquement conductrice.

11. Ensemble, comprenant une bague de mise à la terre selon l'une des revendications 9 ou 10 et un premier élément de machine et un deuxième élément de machine, la bague de mise à la terre venant en contact avec une surface du premier élément de machine, le premier élément de machine étant disposé concentriquement au deuxième élément de machine, le premier élément de machine étant disposé de manière adjacente au deuxième élément de machine à une distance radiale de celui-ci, la bague de mise à la terre étant disposé dans l'espace formé par la distance radiale, le deuxième élément de machine étant mis à la terre à un potentiel de masse défini et les premier et deuxième éléments de machine venant chacun en contact d'appui avec la bague de mise à la terre et sont ainsi reliés l'un à l'autre de manière électriquement conductrice.

12. Bague de mise à la terre selon la revendication 11, **caractérisé en ce que** le premier élément de machine est formé par un arbre ou par un boîtier enfermant l'arbre et le deuxième élément de machine est formé par un boîtier enfermant l'arbre ou par un arbre.
